Europäisches Patentamt

European Patent Office

Office européen des brevets

(11) Publication number: **0 095 213**
**A2**

(12) # EUROPEAN PATENT APPLICATION

(21) Application number: **83200703.3**

(22) Date of filing: **17.05.83**

(51) Int. Cl.³: **B 65 G 47/14**
**B 65 G 65/23**

(30) Priority: **24.05.82 IT 4683282**
**27.08.82 IT 4685582**

(43) Date of publication of application:
**30.11.83 Bulletin 83/48**

(84) Designated Contracting States:
**AT BE CH DE FR GB LI LU NL SE**

(71) Applicant: **A.I.C.M.A. S.n.c. di Squeri Donato & C.**
**9, Strada Filagni**
**I-43030 Rico'-Fornovo Taro (Parma)(IT)**

(72) Inventor: **Donato, Squeri**
**6, Via Magnana**
**I-43030 Rico' - Fornovo Taro (Parma)(IT)**

(74) Representative: **Corradini, Corrado**
**4, Via Sessi**
**I-42100 Reggio Emilia(IT)**

(54) Machine for extracting bottles randomly contained in boxes, and for depositing them aligned and upright on a belt.

(57) A machine for extracting bottles randomly contained in boxes and depositing them aligned and upright on a belt, comprising a cage (15, 16, 17) which swivels in a longitudinal vertical plane in order to alternately receive a full box (3) from a roller feed table (2) and to raise it into an overturned position while maintaining it closed, in said position the boxes (3) being extracted from the cage (15, 16, 17) by a raising device (21, 22, 23, 24) which causes the bottles (4) to fall on to an underlying conveyor (26); the empty boxes are discharged on to an accumulation surface (27), and the bottles (4) pass through a labyrinth of deviating rods (35) where the bottles (4) are all disposed longitudinally and laid side-by-side, to be finally deposited upright on a discharge belt (40).

Fig.1.

- 1 -

MACHINE FOR EXTRACTING BOTTLES RANDOMLY CONTAINED IN BOXES, AND
FOR DEPOSITING THEM ALIGNED AND UPRIGHT ON A BELT

In large commercial centres for selling directly to the public, such
as supermarkets, products contained in glass or plastics bottles
of all sizes are presented in large receptacles in the form of a box
or chest, which are also used for recovering and returning the
empties. These latter are randomly contained in said receptacles,
so that before being refilled they must be orientated in the same
direction in order to undergo the necessary operations, such as
washing, which precede said filling. Up to the present time, these
large receptacles have been emptied manually, this involving long,
complicated, repetitive and/or monotonous operations and the need
for a large number of personnel.

The present invention obviates the aforesaid drawbacks by providing
a machine able to automatically and rapidly effect the aforesaid
operations by means of a simple and rational design.

According to the invention, the proposed machine comprises a roller
table for feeding the receptacles in which the containers are randomly accumulated, the roller table serving a type of cage into which
the receptacles are inserted in turn, and are then overturned in
an upward direction so that their mouth becomes inclined to the
vertical. The cage comprises a cover arranged to close the mouth of
the receptacles, and two elevators are disposed in a fixed position
to the side of the overturned cage in order to extract the
receptacles from the cage. In this manner, the mouths of the
receptacles withdraw from said cover in order to discharge the
containers on to an underlying conveyor provided with longitudinal
channels and with deviator members arranged to cause the containers
to penetrate into said channels. The channels can comprise walls
at different speeds. The empty receptacles are discharged from the
elevators on to a holding surface above the channel conveyor, this
latter depositing the containers side-by-side and parallel to each
other on to a further conveyor provided with an orientation device.
This latter disposes all the containers with their base downwards so that they become deposited in an upright position on a discharge belt.

These and further constructional merits of the invention will be more apparent from the description given hereinafter with reference to the accompanying figures, which show two particular preferred embodiments thereof by way of non-limiting example.

Figure 1 is an overall side view of the machine.

Figure 2 is a plan view thereof.

Figure 3 is a section on the line III-III of Figure 2.

Figure 4 is a section on the line IV-IV of Figure 2.

Figure 5 is a broken side view showing an alternative embodiment of the channel conveyor of the invention.

Figure 6 is a section on the line VI-VI of Figure 5.

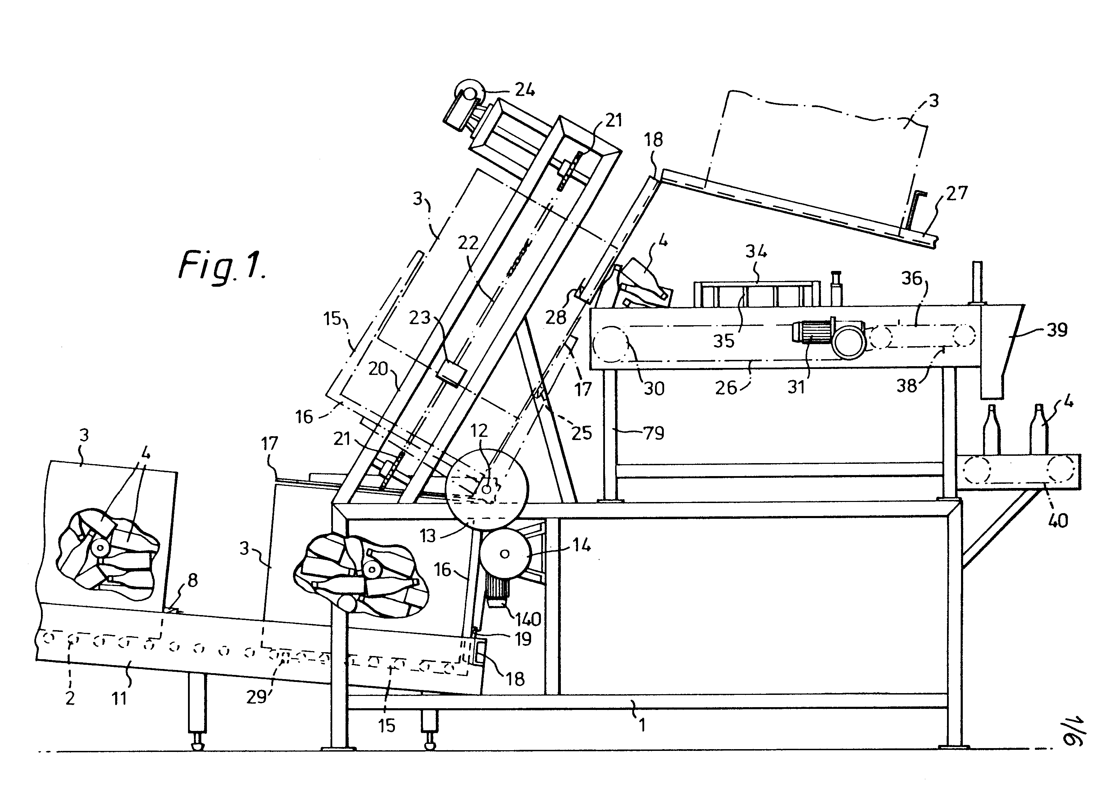

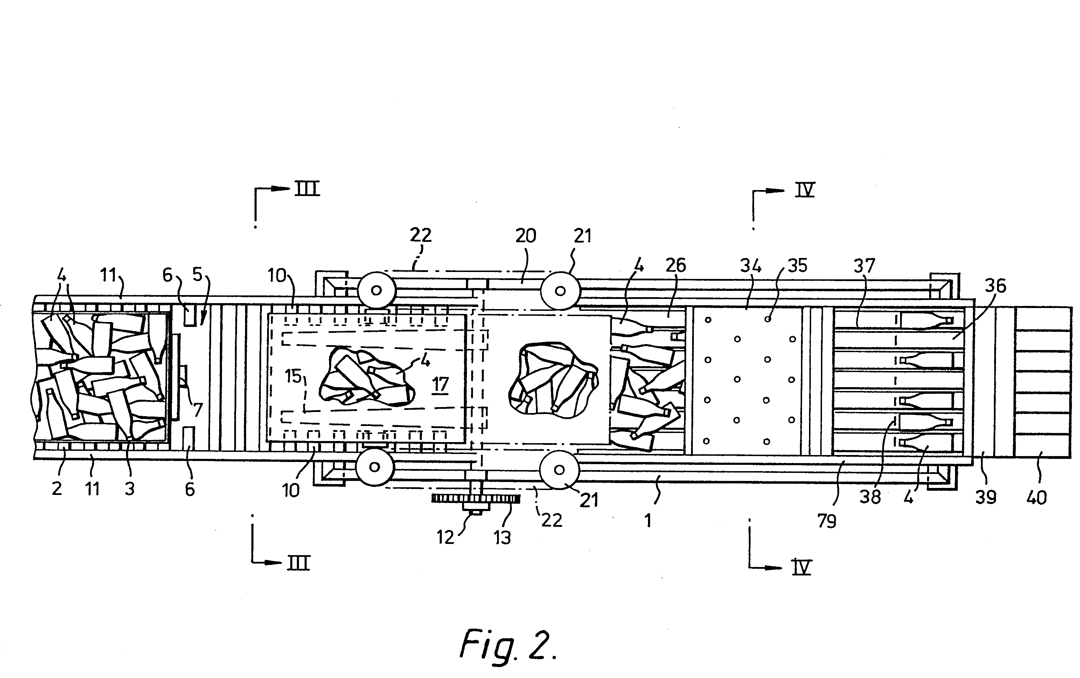

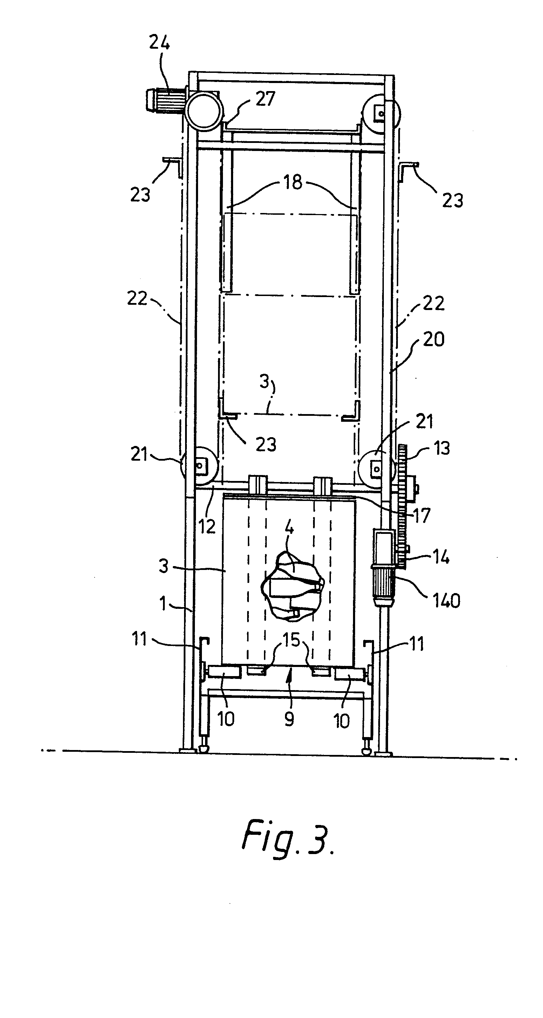

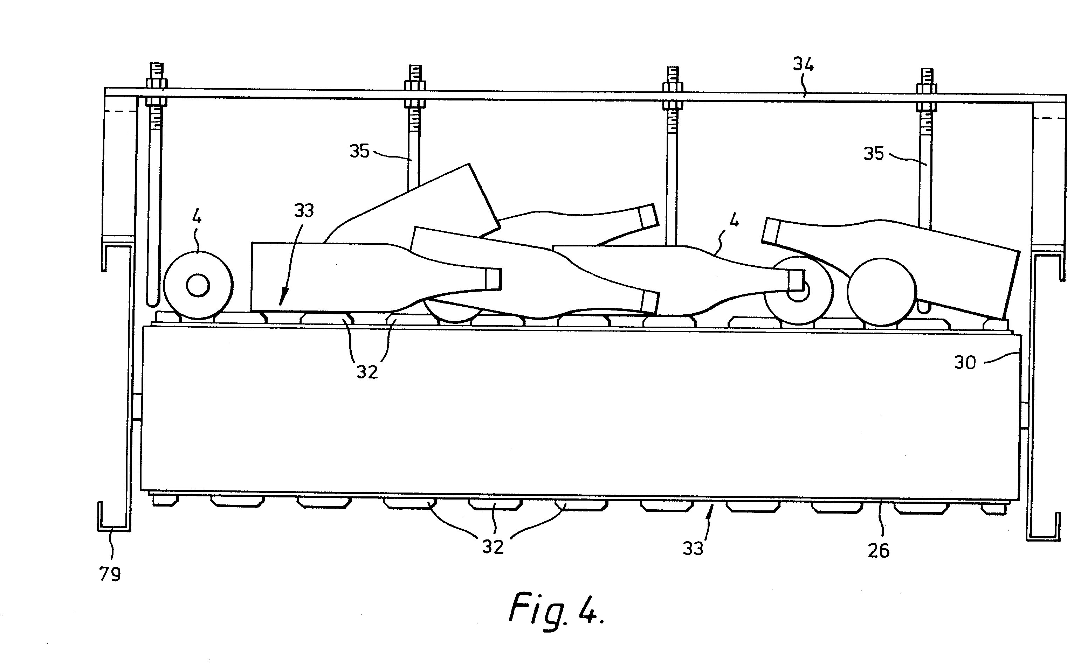

Figures 1 and 2 show a base frame 1, from the front end of which there branches a roller feed table 2 which is slightly inclined downwards in the downstream direction. On the roller feed table 2 are placed large receptacles 3, for example in the form of boxes or chests, in which containers 4, represented by bottles in this specific case, are randomly amassed. The roller feed table 2 comprises a first central aperture 5 provided with two lateral jutting roller sections 6 and in which there is a stop device 7 for the chests 3, comprising a vertically mobile transverse bar (Figure 2) of which the movements are controlled by an underlying piston-cylinder unit (not shown). The blocking movements of the stop 7 are determined by a feeler 8 (Figure 1), and the distance between the stop device 7 and the downstream end of the roller table 2 is greater than the longitudinal dimension of the boxes or chests 3 in order to allow them to swivel upwards without impact. The downstream end of the roller feed table 2 comprises a central longitudinal aperture 9, see Figure 3, which is bounded laterally by two jutting roller sections 10. The roller feed table 2 is provided laterally with longitudinal guides 11 for centering the chests 3, and above its downstream end there is disposed a cage which is hinged to the frame 1 on a transverse horizontal shaft 12.

On one end of said shaft 12 there is keyed a sprocket wheel 13, with which there engages an underlying toothed wheel 14 driven by a drive unit 140. The cage comprises a lower fork 15 (Figures 2 and 3) designed for insertion into the longitudinal aperture 9 to become disposed slightly below the jutting roller sections 10, and further comprises a rear orthogonal wall 16, and an upper plate 17 parallel to the fork 15 to act as a cover for the chests 3 (Figure 1). When the cage is in its lowered position, it rests against a cross member 18 of the frame 1, where there is also provided a feeler 19 arranged to detect the presence of a chest inside the cage, and to cause this latter to rotate upwards. The total rotation of the cage is 120° (Figure 1), so that the cover 17 becomes disposed in perfect alignment with two angular slide tracks 18 fixed to a framework 79 branching upwards from the frame 1.

The distance between said tracks is practically equal to the width of the chests 3. In front of the tracks 18 and parallel thereto, there is disposed a portal 20, of which the uprights are each provided with two end sprocket wheels 21 with a respective endless chain 22. The two chains 22 lie in the same plane inclined to the vertical, at a distance from the tracks 18 which is practically equal to one half the depth of the chests 3 (Figure 1).

Each chain 22 is provided with two right angled members 23 which project outwards and are arranged to extract the chests 3 from the cage 15, 16, 17, when this latter is in its raised position (Figures 1 and 3). The lower sprocket wheels 21 are idle, whereas the upper ones are the drive wheels and are both driven by way of a transmission, not shown in the figure, from a geared motor 24 supported by the portal 20. Figure 1 also shows that the cross member of the portal 20 is configured as a fork disposed orthogonally to the uprights in order to allow passage of the empty chests 3 during the discharge stage. When the cage is in its raised position it contacts a feeler 25, which causes the drive unit 140 to stop and the geared motor 24 to start. In this manner, two opposing right angled members 23 raise the chest 3, so extracting it from the cage, and the bottles 4 pass beyond the tracks 18 to fall on to an underlying horizontal conveyor 26.

When the empty chest 3 reaches the top of the tracks 18, it rests on a longitudinal chute 27 lying above the conveyor 26 (Figure 1). The empty chest is then removed. As shown in Figure 1, to the side of the tracks 18 there is a feeler 28 which is contacted by the chest during its raising, and which after the chest has been discharged on to the chute 27 causes the geared motor 24 to stop and sets the next pair of members 23 for a new raising stage, and also authorises the lowering of the cage into its loading position. In said position, the cage contacts a feeler 29 which is provided along the roller table 2, and which feeds a signal to the feeler 8 which in its turn causes the device 7 to be released. At this point, the second chest is inserted into the cage to undergo the same operations. It should be noted that when said second chest 3 loses contact with the feeler 8, this latter instantaneously causes the stop device to rise in order to halt the third chest 3.

The bottles 4 discharged from the chest 3 accumulate on the upper horizontal portion of the conveyor 26, which comprises a belt passing about two transverse horizontal drums 30, of which the downstream drum is driven by a geared motor unit 31 (Figure 1). The outer surface of the belt 26 is provided with equidistant longitudinal ribs 32 (Figure 4), between each pair of which there is defined a longitudinal channel 33. Downstream of the collection zone for the bottles 4, as shown in Figures 1, 2 and 4, there is disposed above the conveyor 26 a plate 34 which is provided lowerly with four transverse rows of vertical rods 35, which extend until they practically make contact with the ribs 32. The rods 35 of each row are distributed at a constant pitch, and adjacent rows are mutually staggered. In order to prevent clogging of the conveyor 26, the distribution pitch of the rods in the rows is practically equal to the length of a bottle 4. Moreover, the thickness of the rods 35 is such as to allow passage of the correctly orientated bottles located in the two channels 33 which straddle each individual rod (Figure 4). Thus, as the bottles traverse this labyrinth of vertical rods, they all become inserted longitudinally into said channels 33, it being indifferent whether the neck or the base points forwards.

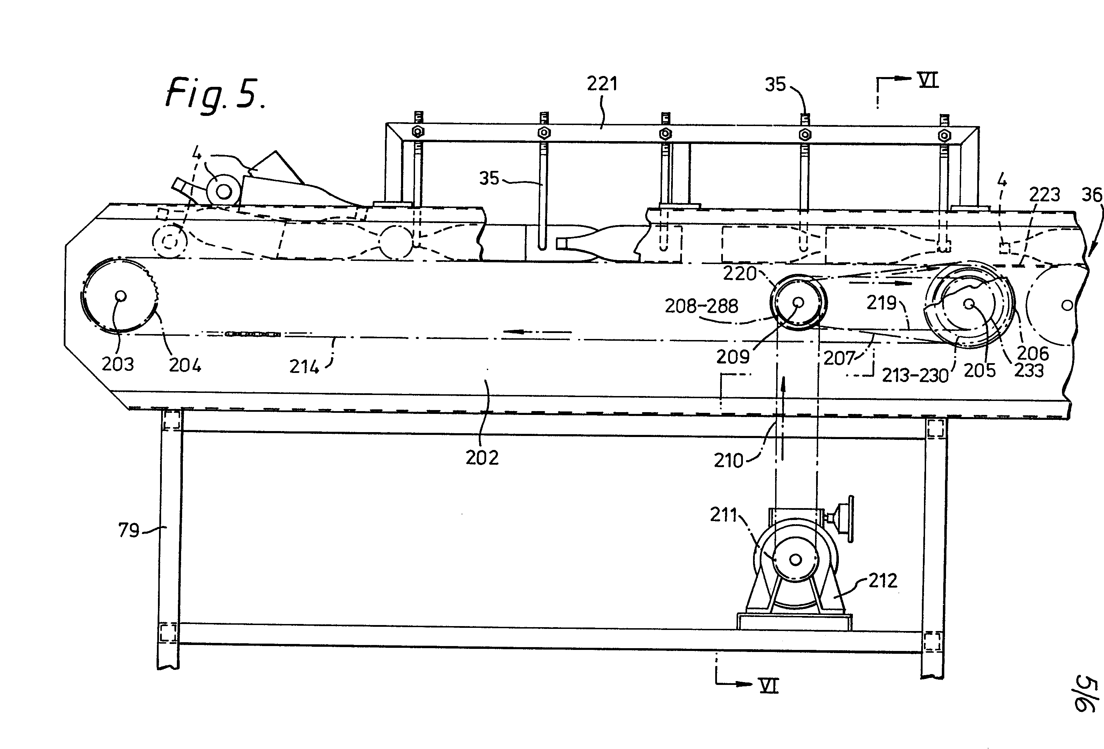

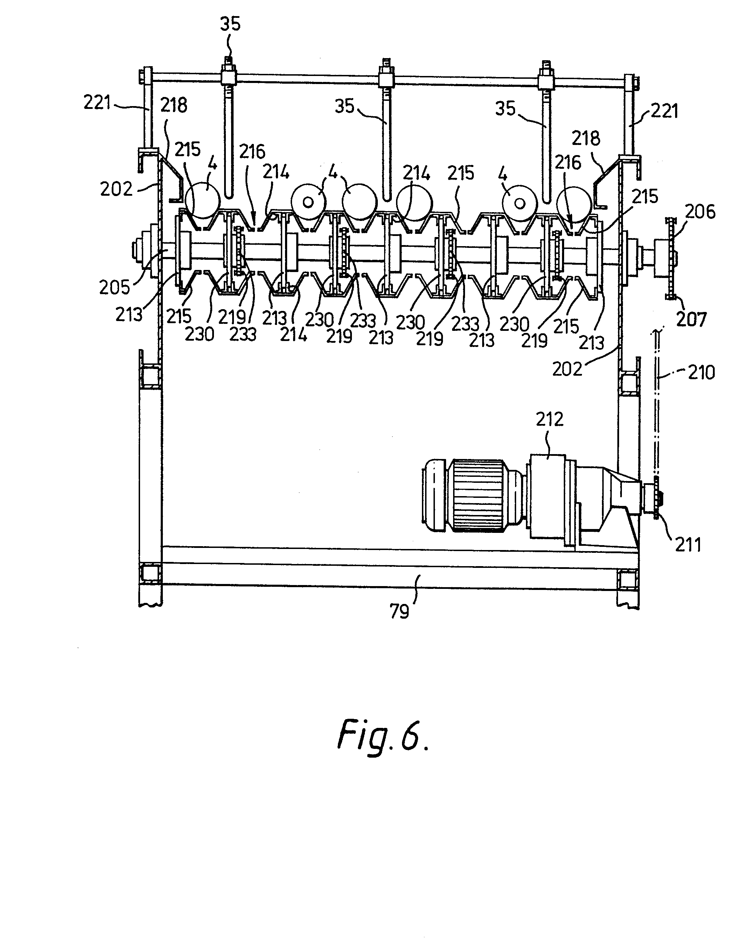

In the alternative embodiment shown in Figures 5 and 6, which is particularly suitable for machines of high production capacity, the conveyor for collecting the bottles 4 comprises two side pieces 202 on which there is idly mounted a first horizontal transverse shaft 203 on which there is keyed a series of sprocket wheels 204 (Figure 5). Said side pieces 202 support a second transverse shaft 205, provided with an end sprocket wheel 206 about which there passes a chain 207 which passes about a pinion 208. This latter is keyed to the end of an intermediate shaft 209 disposed at the same level as the shafts 203 and 205. To the side of the pinion 208 there is a second pinion 288 (Figure 6) about which there passes a chain 210 which also passes about a sprocket wheel 211 driven by a geared motor with incorporated variator 212, which is fixed to the framework 79. On the shaft 205 there is provided a series of sprocket wheels of number equal to the number of sprocket wheels 204. More specifically, said series of sprocket wheels comprises five sprocket wheels 213 keyed on to the shaft 5 and four idle sprocket wheels 230 interspersed with the sprocket wheels 213. The sprocket wheels 213 and 230 have the same pitch circle diameter (Figure 6), which is also equal to that of the sprocket wheels 204. Between the upstream sprocket wheels 204 and the downstream sprocket wheels 213 and 230 there extend respective endless chains 214, to the links of each of which there is externally fixed a plurality of equal equidistant profiled members 215, of stylised "omega" configuration (Figure 6).

The profiled members 215 have their concavity facing the corresponding chain, and are symmetrically disposed with respect to this latter. In this manner, between each pair of chains there is defined a longitudinal channel 216 for receiving the containers 4. In addition, the upper rectilinear branch of the said conveyor comprises two longitudinal retaining walls 218. Moreover, on the hub of each idle sprocket wheel 230 there is provided a pinion 233 about which there passes a chain 219, and which has a pitch circle diameter less than that of the sprocket wheels 213, 230. The chains 219 pass about respective drive pinions 220 rigid with the intermediate shaft 209 (Figure 5). Immediately downstream of the loading zone of the conveyor 214, 215 there is provided a structure 221 which supports a series of vertical deviating rods 35 disposed as described heretofore with reference to Figures 2 and 4.

In accordance with the aforesaid embodiment, because of the different speeds of the two opposing walls of each longitudinal channel 216 of the conveyor, the containers 4 which are not immediately inserted into said channels 216, and are therefore disposed transversely or obliquely to one of them, are made to rotate about themselves until they become disposed longitudinally, aided by the deviating rods 35, until said containers fall into the channels 216.

The conveyor 26 or 214, 215 deposits the bottles 4, by way of a slide surface 223 (Figure 5) on to a conveyor/spacer 36 (Figures 1 and 5) which comprises a belt with transverse fins 38, and is driven by the said geared motor 31 or 212. The upper rectilinear portion of said conveyor/spacer 36 is divided into a series of longitudinal channels by suitable baffles 37 (Figure 2). These channels are aligned with the channels 33, 216 of the conveyor 26, 214-215. Downstream of the conveyor 36 there is a normal orientation device, not shown, which for each individual channel of the conveyor 36 comprises a vertically swivelling retainer. The retainer swivels freely when a bottle 4 presents itself with its base pointing forwards, whereas otherwise it grips the neck of the bottle in order to invert this latter. In this manner all the bottles are discharged, with their base pointing downwards, into a multi-channel vertical conveyor 39 disposed below the conveyor/spacer 36, and which itself discharges the bottles upright on to an underlying conveyor belt 40, from which the bottles 4 proceed towards the other operating stations, for example towards a washing/sterilising machine.

The invention, which also comprises all the technical equivalents of the means heretofore specified, is not limited to the single embodiments heretofore described and represented, and improvements and/or modifications can be made thereto without leaving the scope of protection of the following claims.

Thus for example the fork 15 can be replaced by a roller section arranged for insertion into the aperture 9 in order to become disposed between the two opposing roller sections 10.

PATENT CLAIMS

1.    A machine for extracting bottles randomly contained in boxes and to deposit them aligned and upright on a belt, characterised by comprising a roller feed table (2) for the full boxes (3) and downwardly inclined in the downstream direction; a cage (15, 16, 17) which swivels about a horizontal transverse shaft (12) and is arranged to alternately align with said roller feed table (2) in order to receive one full box (3) at a time, and to raise it into a nearly overturned position while maintaining it closed; an extractor device (21, 22, 23, 24) which embraces the raised cage (15, 16, 17) and is arranged to withdraw the boxes (3) therefrom in order to discharge the bottles (4); a conveyor/aligner (26, 35; 214, 215, 35) disposed downstream of the extractor (21, 22, 23, 24) and arranged to longitudinally orientate the bottles (4) in a side-by-side lying position; means (18, 27) for sliding the boxes (3) during their emptying and for accumulating them when completely empty, said means being disposed above said conveyor/aligner (26, 35; 214, 215, 35); and means (36, 39) disposed downstream of this latter in order to deposit the upright bottles (4) on to a discharge belt (40).

2.    A machine as claimed in claim 1, characterised in that said downwardly inclined roller feed table (2) comprises in proximity to its downstream end an aperture (5) bounded laterally by two jutting opposing partial roller conveyors (6) and housing a vertically mobile striker (7) for the temporary stoppage of the boxes (3) directed towards the swivel cage (15, 16, 17), said roller feed table (2) also comprising at its downstream end a longitudinal aperture (9) open in the downstream direction and arranged to receive the cage (15, 16, 17) when in its lowered position, said aperture (9) also being laterally bounded by two opposing jutting roller conveyor portions (10).

3.    A machine as claimed in claim 1, characterised in that said swivel cage comprises a fork (15) arranged for insertion into said downstream aperture (9) of the roller feed table (2), an orthogonal rear wall (16), and an upper plate (17) parallel to the fork (15) and arranged to act as a cover for the boxes (3) during their overturning; the cage (15, 16, 17) being hinged to the machine frame (1) at the corner at which said rear wall (16) and upper plate (17) are connected together, the swivel movements thereof being controlled by a gear train (13, 14) and a relative drive unit (140), the operation of this latter being actuated by the complete insertion of the box (3) into the lowered cage (15, 16, 17).

4. A machine as claimed in claim 1, characterised in that said extractor device comprises a fixed transverse portal (20) inclined in a downstream direction so that it is parallel to the base of the raised boxes (3), its uprights being each provided with an endless chain (22) which has the same inclination as the portal (20) and is externally fitted with equidistant projecting brackets (23) arranged to engage with the lower side wall of the boxes (3) when these are in their raised position; there being finally provided a geared motor unit (24) for driving said two endless chains (22), its operation being actuated by the boxes (3) reaching their raised position.

5. A machine as claimed in claim 1, characterised in that said conveyor/aligner comprises an endless horizontal belt (26) disposed at a level which is substantially that of the upper edge of the cover (17) of the cage (15, 16, 17) when this latter is in its raised position, the outer surface of said belt (26) being traversed by a plurality of equidistant longitudinal channels (33) arranged to receive the bottles (4) in a side-by-side laying position; above the downstream portion of the upper rectilinear branch of said belt (26) there being disposed a series of side-by-side staggered rows of vertical deviating rods (35) which extend downwards to a position a short distance from the separation edges between two adjacent channels (33), in order to vary the disposition of badly orientated bottles (4) and to cause them all to fall into said longitudinal channels (33).

6. A machine as claimed in claim 1, characterised in that said conveyor/aligner is in the form of a horizontal conveyor system comprising two intercalated sets of adjacent endless members which are driven at different speeds and are each constituted by a chain (214), to the links of which there are fixed external profiled members (215) arranged to define, together with the corresponding profiled members (215) of the two adjacent chains (214), a pair of longitudinal channels (216) for receiving the containers (4), above the downstream zone of said conveyor system there being disposed a labyrinth of vertical deviating rods (35) arranged to collaborate with said adjacent endless members (214, 215) in order to cause the containers (4) to rotate about themselves and to fall into said longitudinal channels (216).

7. A machine as claimed in claim 6, characterised in that said two intercalated sets of endless members (214, 215) pass about respective sets of drive sprocket wheels (213, 230) of the same pitch circle diameter, one set (213) of said sprocket wheels (213, 230) being keyed on to the drive shaft (205) of said conveyor system, whereas the other set (230) is idle and with each of its sprocket wheels (230) there is associated a pinion (233) of smaller pitch circle diameter, which is driven by way of a chain transmission (219, 210) from the drive unit (212) which drives said drive shaft (205).

8. A machine as claimed in claim 1, characterised in that said means for sliding the boxes (3) during their emptying comprise two opposing angular tracks (18) inclined to the vertical, and with which the lateral edges of the cover (17) of the cage (15, 16, 17) become aligned when this latter is in its raised position, said tracks being arranged to support the boxes (3) during their withdrawal, while the bottles (4), no longer retained by the cover (14), pass beyond said tracks (18) and on to the conveyor/aligner (26, 35; 214, 215, 35); along said tracks (18) there being provided a feeler (28) which, after the empty boxes (3) have been discharged, causes stoppage of the raising device (21, 22, 23, 24) and the simultaneous lowering of the cage (15, 16, 17).

9. A machine as claimed in claim 1, characterised in that said means for accumulating the completely empty boxes (3) comprise a chute (27) inclined downwards in the downstream direction as a direct extension of said slide tracks (18), and disposed above said conveyor/aligner (26, 35; 214, 215, 35).

10. A machine as claimed in claim 1, characterised in that said means arranged to deposit the bottles upright on a discharge belt comprise a conveyor/spacer with several channels (36, 37), these latter being aligned with the channels (33; 216) of said conveyor/ aligner (26, 35; 214, 215, 35) and traversed by transverse thrust fins (38); an orientation device arranged to overturn those bottles (4) which arrive at the outlet of the channels (37) with their neck pointing forwards; and a vertical multi-way conveyor (39) disposed downstream of the conveyor/spacer (36, 37, 38), above the discharge belt (40) for removing upright bottles (4).

Fig.1.

Fig. 2.

Fig. 3.

Fig. 4.

## Fig. 5.

Fig.6.